# FASCICULE DE BREVET EUROPEEN

(11) **EP 2 962 019 B1**
(45) Date de publication et mention de la délivrance du brevet: **19.10.2016**
(21) Numéro de dépôt: 14713160.1
(22) Date de dépôt: 20.02.2014
(51) Int. Cl.: F16K 1/20

(54) **VANNE, NOTAMMENT POUR MOTEUR THERMIQUE**
VENTIL, INSBESONDERE FÜR EINE WÄRMEKRAFTMASCHINE
VALVE, IN PARTICULAR FOR A HEAT ENGINE

(30) Priorité: 26.02.2013 FR 1351661
(43) Date de publication de la demande: 06.01.2016
(73) Titulaire: Valeo Systèmes De Contrôle Moteur, 95800 Cergy St Christophe (FR)
(72) Inventeur: MARTIN, Nicolas, F-78600 Maisonslafitte (FR); HODEBOURG, Grégory, F-78500 Sartrouville (FR); CRAVO, David, F-95520 Osny (FR)
(74) Mandataire: Tran, Chi-Hai
(86) Numéro de dépôt international: PCT/FR2014/050346
(87) Numéro de publication internationale: WO 2014/131968

(56) Documents cités:
- WO-A1-2012/001282
- DE-A1- 2 427 995
- GB-A- 745 191
- US-A1- 2003 192 606

## Description

La présente invention concerne une vanne, notamment pour moteur thermique.

L'invention s'applique notamment lorsque le moteur thermique est utilisé pour la propulsion d'un véhicule, par exemple d'un véhicule automobile. Il peut s'agir d'un moteur dont le carburant est de l'essence ou du diesel. La vanne peut être intégrée au circuit d'air du moteur thermique.

Au sens de l'invention, on désigne par « circuit d'air de moteur thermique » le circuit entre l'entrée d'admission et la sortie d'échappement du moteur thermique. La vanne peut être disposée dans le circuit d'admission, le circuit d'échappement, ou une boucle de recirculation par laquelle transitent les gaz d'échappement réinjectés à l'admission (EGR en anglais).

Dans le cas d'une vanne comprenant :
- un corps dans lequel est ménagé un conduit dans lequel transite un fluide, et
- un volet monté mobile dans le corps entre une position ouverte et une position fermée dans lequel il doit obturer le conduit,
des problèmes de fuite de la vanne lorsque le volet est en position fermée existent. Pour y remédier sans avoir besoin d'un joint interposé entre le corps et le volet lorsque ce dernier est dans la position fermée, il est connu d'amener directement le volet en contact avec le corps lorsque le volet est en position fermée.

La demande déposée en France le 10 octobre 2012 par la Déposante sous le numéro 12 59688 enseigne de ménager un jeu supplémentaire dans le ou les paliers interposés entre l'arbre entraînant le volet et un logement du corps recevant ledit arbre. Du fait de ce jeu supplémentaire, le volet ne se coince pas contre la paroi du conduit lorsqu'il passe de la position ouverte à la position fermée, sans qu'il soit nécessaire que la distance Dv, mesurée entre le centre de l'arbre et le plan de joint du volet, soit inférieure ou égale à la distance Dc, mesurée entre le centre du logement du corps dans lequel est reçu l'arbre et le plan de joint P du corps. Le jeu du ou des paliers constitue alors une variable d'ajustement vis-à-vis des imprécisions sur les cotes des différentes pièces de la vanne lors de la fabrication de celle-ci.

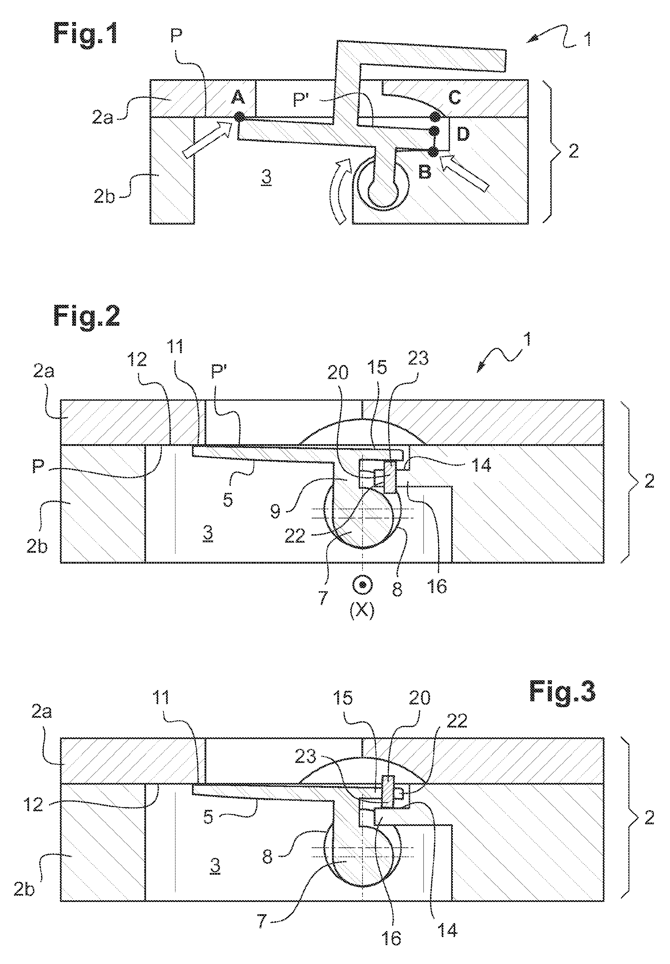

Avec une telle vanne, des fuites peuvent exister lorsque le volet est dans la position fermée et ces fuites sont liées à la présence de chaque côté du volet d'une section de fuite formée par le triangle ADC représenté sur la figure 1.

Ces fuites peuvent également être liées à la présence d'un rectangle perpendiculaire au plan de la figure 1 et ayant pour surface la distance DC (différente de Dc ci-dessus) de la figure 1 multipliée par la distance selon laquelle le volet s'étend le long de l'arbre.

La hauteur (ou distance DC sur la figure 1) de ce triangle dépend ici de deux cotes, à savoir :
- la profondeur de la marche aménagée dans le corps pour recevoir une extrémité du volet, et
- l'épaisseur de la portion du volet reçue dans cette marche.

Lorsque le volet et le corps sont réalisés par usinage, le taux d'imprécision global sur ces deux cotes peut s'élever à 0,1mm. En conséquence, dans le cas le plus défavorable, la hauteur DC peut être supérieure de plus de 0,1 mm à ce qui était attendu, d'où des fuites accrues lorsque le volet est dans la position fermée.

L'invention a pour but de fournir une vanne présentant les avantages de celle décrite dans la demande mentionnée ci-dessus et déposée par la Demanderesse, tout en réduisant les sections de fuite lorsque le volet est dans la position fermée.

Selon l'un de ses aspects, l'invention répond à ce but à l'aide d'une vanne, notamment pour moteur thermique, comprenant :
- un corps dans lequel sont ménagés : un logement dans lequel est disposé au moins un palier, et un conduit apte à être parcouru par un fluide, et
- un volet monté pivotant dans le conduit par un arbre reçu avec jeu radial dans le palier,
le volet pivotant entre :
- une position ouverte, et
- une position fermée dans laquelle il vient en contact avec le corps:
   - directement par une première zone de contact du volet située d'un premier côté de l'arbre, et
   - indirectement via une pièce intermédiaire qui est alors interposée au moins en partie entre le corps et une deuxième zone du volet située d'un deuxième côté de l'arbre opposé audit premier côté,
le passage par le volet de la position ouverte à la position fermée s'accompagnant d'un déplacement radial de l'arbre dans le palier.

Selon la vanne ci-dessus, lorsque la vanne est dans la position fermée, le contact entre la vanne et le corps au niveau du deuxième côté de l'arbre ne s'effectue pas entre deux pièces usinées, comme auparavant, mais entre la pièce intermédiaire et une pièce usinée, à savoir le corps ou le volet. On supprime ainsi l'imprécision liée à au moins une cote.

La pièce intermédiaire peut ainsi définir une position de butée de la deuxième zone du volet lorsque le volet est en position fermée. La pièce intermédiaire empêche ainsi la deuxième zone du volet de venir au contact de la portion du corps dont elle est en regard.

La vanne peut être configurée de manière à permettre de régler la valeur de l'écart causé par l'interposition de la pièce intermédiaire entre la deuxième zone du volet et le corps. Autrement dit, on peut n'agir que sur cette pièce intermédiaire pour régler la valeur dudit écart. Cette action peut consister à déplacer la pièce de réglage par rapport à la deuxième zone du volet et par rapport au corps.

Selon un premier exemple de mise en oeuvre de l'invention, la pièce intermédiaire est configurée pour être solidarisable au corps et la deuxième zone du volet vient en appui contre ladite pièce intermédiaire lorsque le volet est en position fermée.

Au sens de la présente demande, deux pièces sont solidaires ou solidarisées lorsqu'il n'existe aucun degré de liberté entre elles.

La pièce intermédiaire peut par exemple être mobile par rapport au corps lors d'une phase de réglage de la valeur de l'écart entre le corps et la deuxième zone du volet et, une fois une valeur prédéfinie atteinte pour cet écart, la pièce intermédiaire est solidarisée au corps.

Selon un deuxième exemple de mise en oeuvre de l'invention, la pièce intermédiaire peut être configurée pour être solidarisable au volet et la pièce intermédiaire peut alors venir en appui contre le corps lorsque le volet est en position fermée.

La pièce intermédiaire peut par exemple être mobile par rapport au volet lors d'une phase de réglage de la valeur de l'écart entre le corps et la deuxième zone du volet et, une fois une valeur prédéfinie atteinte pour cet écart, la pièce intermédiaire est solidarisée au volet.

Selon l'un ou l'autre des exemples de mise en oeuvre ci-dessus, la pièce intermédiaire peut être une vis, une goupille, un rivet, cette liste n'étant pas limitative.

Selon l'un ou l'autre des exemples de mise en oeuvre ci-dessus, la solidarisation de la pièce intermédiaire à l'un du volet et du corps peut se faire par :
- sertissage,
- collage,
- soudure,
- déformation volontaire d'un filet ménagé dans un logement du corps ou du volet et apte à recevoir la pièce intermédiaire, ledit filet étant configuré pour coopérer avec la pièce intermédiaire lorsqu'elle est dans ce logement, ou encore
- emmanchement serré de la pièce intermédiaire dans un logement du corps ou du volet,
« emmanchement serré » signifiant que la pièce intermédiaire est introduite dans le logement alors que ce dernier présente une dimension transversale inférieure à la dimension correspondante de ladite pièce intermédiaire.

Selon l'un ou l'autre des exemples de mise en oeuvre ci-dessus, le corps peut présenter, dans un plan perpendiculaire à l'arbre, une portion faisant saillie dans le conduit, et la pièce intermédiaire peut être disposée entre ladite portion en saillie et la deuxième zone du volet lorsque le volet est dans la position fermée.

Dans une variante se rapportant au premier exemple de mise en oeuvre de l'invention, le corps comprend par exemple un logement ménagé dans la portion faisant saillie, et la pièce intermédiaire et le logement sont configurés pour que la pièce intermédiaire puisse être reçue dans le logement puis maintenue en place dans ce dernier dans au moins une position prédéfinie. Lorsque la pièce intermédiaire est maintenue dans cette position prédéfinie et solidarisée au corps, l'écart entre le corps et le volet alors que le volet est dans la position fermée peut avoir une valeur égale à la valeur prédéfinie.

Dans une variante se rapportant au deuxième exemple de mise en oeuvre de l'invention, la deuxième zone du volet comprend un logement, et la pièce intermédiaire et le logement sont configurés pour que la pièce intermédiaire puisse être reçue dans le logement puis maintenue en place dans ce dernier dans au moins une position prédéfinie. Similairement à ce qui vient d'être décrit, lorsque la pièce intermédiaire est maintenue dans cette position prédéfinie, l'écart entre le volet et le corps alors que le volet est dans la position fermée peut avoir la valeur prédéfinie.

Dans une variante s'appliquant aussi bien au premier qu'au deuxième exemple de mise en oeuvre de l'invention, le corps peut présenter, dans un plan perpendiculaire à l'arbre, une portion faisant saillie dans le conduit, ladite portion comprenant une extrémité libre et une extrémité reliée à une portion de transition dont une seule face, dans ledit plan, est en regard du conduit. La portion de transition n'est ainsi bordée par le conduit que d'un seul côté lorsqu'observée dans ledit plan, contrairement à la portion en saillie qui est bordée de chaque côté par le conduit dans ce plan.

Selon une variante se rapportant au premier exemple de mise en oeuvre de l'invention, le corps comprend un logement ménagé dans la portion de transition, et la pièce intermédiaire et le logement sont configurés pour que la pièce intermédiaire puisse être reçue dans le logement puis maintenue en place dans ce dernier dans au moins une position prédéfinie.

Selon une variante se rapportant au deuxième exemple de mise en oeuvre de l'invention, la deuxième zone du volet comprend un logement, et la pièce intermédiaire et le logement sont configurés pour que la pièce intermédiaire puisse être reçue dans le logement puis maintenue en place dans ce dernier dans au moins une position prédéfinie.

Cette portion de transition peut être plus éloignée de l'arbre que la portion faisant saillie dans le conduit, et la coopération via la pièce intermédiaire de la deuxième zone du volet avec la portion de transition peut permettre un réglage plus fin de l'écart que lorsque la pièce intermédiaire est interposée entre le volet et la portion faisant saillie.

Dans tout ce qui précède, le logement peut être borgne ou traversant. Lorsque la pièce intermédiaire coopère avec un logement, l'action sur cette pièce pour régler la valeur de l'écart peut consister à translater la pièce intermédiaire dans le logement pour atteindre la position prédéfinie.

Lorsque la pièce intermédiaire est en place dans le logement, une partie de celle-ci peut faire saillie en dehors du logement.

La vanne peut être une vanne disposée dans le circuit d'admission du moteur thermique, dans le circuit d'échappement du moteur thermique, ou dans une boucle de recirculation des gaz d'échappement permettant à ces derniers d'être réinjectés à l'admission du moteur thermique. Cette boucle de recirculation peut être « basse pression » ou « haute pression ».

La vanne est notamment une vanne dite « deux voies ».

En variante, la vanne peut être une vanne dite « trois voies ». La vanne peut alors être disposée à l'entrée de la boucle de recirculation, c'est-à-dire à l'endroit du circuit d'échappement où prend naissance la boucle de recirculation. La vanne dite « trois voies » peut en variante être disposée à la sortie de la boucle de recirculation, c'est-à-dire à l'endroit du circuit d'admission où les gaz d'échappement sont réinjectés à l'admission. La vanne est avantageusement dépourvue d'élément d'étanchéité interposé entre le volet et le corps lorsque le volet est dans la position fermée. Un tel élément d'étanchéité est par exemple un joint d'étanchéité, notamment flexible.

Le volet et l'arbre peuvent être reliés par un support s'étendant le long d'au moins une portion de l'arbre. La vanne présente ainsi un arbre déporté par rapport au volet, contrairement aux vannes dans lesquels l'arbre et le volet sont disposés dans de mêmes plans.

En variante, l'arbre et le volet peuvent être disposés dans de mêmes plans.

Le corps peut présenter un plan de joint du corps venant contacter la première zone de contact du volet lorsque le volet est dans la position fermée et la première zone de contact du volet peut appartenir à un plan de joint du volet.

Lorsque le volet est dans la position fermée, le plan de joint du corps et le plan de joint du volet ont au moins un point de contact. Le jeu radial du ou des paliers peut éloigner une partie du volet du plan de joint du corps, lorsque le volet passe dans la position fermée.

La distance entre le centre du logement et le plan de joint du corps peut être supérieure à la distance entre le centre de l'arbre et le plan de joint du volet. Cette contrainte dimensionnelle, généralement imposée, permet d'éviter le coincement du volet contre la paroi du conduit lorsque le volet passe dans la position fermée. Lorsque cette contrainte est respectée, le jeu du palier n'est pas nécessaire pour éviter le coincement du volet contre la paroi du conduit. Le contact via la pièce intermédiaire du volet contre le corps peut permettre d'empêcher un déplacement trop important de l'arbre dans le palier, et ainsi d'empêcher que de trop grandes sections de fuite n'existent lorsque le volet est dans la position fermée. On réduit ainsi l'utilisation du jeu radial disponible dans le ou les paliers, étant donné que le déplacement du volet du fait de ce jeu pour éviter le coincement n'est alors pas nécessaire.

En variante, la distance entre le centre du logement et le plan de joint du corps peut être inférieure à la distance entre le centre de l'arbre et le plan de joint du volet. Ce cas peut se produire bien que l'on ait cherché à respecter la contrainte dimensionnelle ci-dessus, en raison des imprécisions sur les cotes des pièces de la vanne lors de la fabrication de celles-ci. En l'absence d'utilisation du jeu du ou des paliers, ce cas conduit au coincement du volet contre la paroi du conduit lorsque le volet passe dans la position fermée, ce qui empêche normalement d'utiliser une telle vanne. L'utilisation du jeu dans le ou les paliers permet de se ramener au cas précédent dans lequel il n'y a pas de coincement.

Le jeu dans le ou les paliers peut être dimensionné pour être supérieur ou égal à un taux d'imprécision global prédéfini pour le volet et la partie du conduit dans laquelle le volet se déplace, ce taux d'imprécision global prédéfini résultant notamment de la combinaison linéaire de taux d'imprécision unitaires prédéfinis pour chaque cote du volet et de la partie du conduit dans laquelle le volet se déplace. Chaque taux d'imprécision unitaire prédéfini est par exemple fixé en fonction du retour d'expérience sur la technique utilisée pour fabriquer la pièce correspondante de la vanne.

Le taux d'imprécision global prédéfini peut être obtenu en ajoutant les taux d'imprécision unitaires prédéfinis pour les cotes suivantes :
- distance entre le centre du logement et le plan de joint du corps, et
- distance entre le centre de l'arbre et le plan de joint du volet.

La première zone de contact du volet peut former avec le corps un contact linéique lorsque le volet est dans la position fermée.

Seule la première zone de contact du volet peut venir en contact avec le plan de joint du corps lorsque le volet est dans la position fermée.

Le volet peut avoir une forme de plaque lorsqu'il est observé dans un plan perpendiculaire à son arbre.

Le volet peut avoir en section une forme rectangulaire et la première zone de contact et la deuxième zone peuvent être situées à des extrémités opposées du volet.

En variante, le volet peut avoir en section la forme d'une demi-lune dont le diamètre est prolongé par un rectangle et la première zone de contact peut être située sur le cercle de la demi-lune tandis que la deuxième zone est ménagée dans le rectangle.

Le volet peut comporter deux pièces distinctes, la première zone de contact appartenant à la première pièce et la deuxième zone appartenant à la deuxième pièce. Lesdites pièces sont notamment rigidement couplées entre elles.

La première pièce peut ne s'étendre que du premier côté de l'arbre tandis que la deuxième pièce peut s'étendre de part et d'autre de l'arbre, c'est-à-dire en partie du premier côté de l'arbre et en partie du deuxième côté de l'arbre.

En variante, le volet peut être réalisé d'une seule pièce.

Dans tout ce qui précède, le corps peut comporter une première et une deuxième parties, le conduit étant ménagé successivement dans la première et dans la deuxième partie du corps.

Le logement dans lequel est disposé l'arbre peut être ménagé dans la deuxième partie du corps.

Dans tout ce qui précède, la première zone de contact peut venir en contact d'une paroi du corps, notamment d'une paroi de la première partie du corps, tournée vers la portion du conduit dans laquelle est disposée l'arbre tandis que la pièce intermédiaire est interposée entre la deuxième zone du volet et une paroi du corps, notamment une paroi de la deuxième partie du corps, tournée vers la portion du conduit dans laquelle n'est pas disposée l'arbre. De façon imagée, on peut dire que la première zone de contact engage alors directement avec le corps un contact « vers le haut » vu du volet, tandis que la deuxième zone du volet engage indirectement avec le corps un contact « vers le bas » vu du volet.

L'invention a encore pour objet, selon un autre de ses aspects, un procédé de réglage de la position fermée d'un volet d'une vanne, notamment d'une vanne pour moteur thermique, la vanne comprenant :
- un corps dans lequel est ménagé un conduit, et
- un volet monté pivotant dans le conduit par un arbre, le volet pivotant entre une position ouverte et une position fermée, le volet ayant une première zone apte à venir en regard d'une première paroi du corps et une deuxième zone apte à venir en regard d'une deuxième paroi du corps lorsque le volet est dans la position fermée,
procédé dans lequel :
- on amène le volet dans une position dans laquelle la deuxième zone est en regard de ladite deuxième paroi du corps et on agit sur une pièce intermédiaire mobile à la fois par rapport au corps et au volet pour que l'écart entre la deuxième zone du volet et ladite deuxième paroi du corps prenne une valeur prédéfinie,
- une fois la valeur prédéfinie atteinte pour cet écart, on solidarise la pièce intermédiaire à l'un du volet et du corps de manière à ce que lorsque le volet est dans la position fermée, l'écart entre la deuxième zone du volet et ladite deuxième paroi du corps ait une valeur égale à la valeur prédéfinie du fait que la pièce intermédiaire est alors au moins en partie disposée entre la deuxième zone du volet et ladite deuxième paroi du corps.

L'action sur la pièce intermédiaire pour régler la valeur de l'écart peut consister à déplacer, notamment translater, cette pièce intermédiaire par rapport à la deuxième zone du volet et parrapport à la deuxième paroi du corps.

Le corps peut comporter une première et une deuxième parties, le conduit étant ménagé successivement dans la première et dans la deuxième partie du corps.

Le logement dans lequel est disposé l'arbre peut être ménagé dans la deuxième partie du corps.

La première paroi peut appartenir à la première partie du corps et la deuxième paroi peut appartenir à la deuxième partie du corps. Dans ce cas :
- le volet peut être amené dans la position dans laquelle la deuxième zone du volet est en regard de ladite deuxième paroi de la deuxième partie du corps en l'absence de la première partie du corps, et
- on met en place la première partie du corps sur la deuxième partie du corps une fois la pièce intermédiaire solidarisée à l'un du volet et du corps.

Le réglage de l'écart induit par la présence de la pièce intermédiaire s'effectue dans ce cas alors que la première partie du volet n'est pas en place.

Lors de l'étape de mise en place de la première partie du corps, cette première partie du corps peut être solidarisée à la deuxième partie du corps.

En l'absence de la première partie du corps et avant la solidarisation de la pièce intermédiaire, une pièce de réglage, notamment similaire à la première partie du corps, peut être temporairement mise en place sur la deuxième partie du corps. Cette pièce de réglage peut comprendre des moyens d'accès, par exemple une découpe, à la deuxième zone du volet qui interagit avec la pièce intermédiaire, de façon à permettre d'agir sur la pièce intermédiaire pour régler la valeur de l'écart, bien que la deuxième partie du corps soit recouverte par la pièce de réglage. Ainsi, lorsque l'on règle la valeur de l'écart entre la deuxième zone du volet et ladite deuxième paroi de la deuxième partie du corps, la première zone du volet peut définir une zone de contact avec une paroi de la pièce de réglage, similairement à ce qui se passerait si la première partie du corps était en place. On s'assure ainsi que la position du volet pour laquelle on effectue le réglage de l'écart à l'aide de la pièce intermédiaire correspond bien à la position fermée du volet dans la vanne finale.

Lorsque l'on utilise une telle pièce de réglage, on supprime l'imprécision liée à deux cotes puisque les pièces utilisées, à savoir la pièce intermédiaire et la pièce de réglage, ont alors des cotes connues très précisément.

En variante, la première paroi et la deuxième paroi peuvent toutes deux appartenir à la première partie du corps, de sorte que le réglage de l'écart entre la deuxième zone du volet et la deuxième paroi peut être effectué alors que le corps de la vanne est assemblé.

Dans un exemple particulier selon cette variante, le corps peut être dépourvu de deuxième partie, au moins au niveau du conduit. Le conduit est dans ce cas exclusivement ménagé dans la première partie.

Le procédé peut comprendre l'une quelconque des caractéristiques mentionnées ci-dessus, et notamment celles relatives à la présence d'un jeu supplémentaire dans le ou les paliers par lesquels l'arbre est reçu dans un logement du corps.

Le document DE 24 27 995 A1 divulgue une vanne comprenant les caractéristiques du préambule de la revendication 1.

L'invention pourra être mieux comprise à la lecture de la description qui va suivre d'exemples non limitatifs de mise en oeuvre de celle-ci et à l'examen du dessin annexé sur lequel :
- la figure 1 a déjà été décrite pour introduire un problème que l'invention vise à résoudre,
- la figure 2 représente une vanne selon un premier exemple de mise en oeuvre de l'invention,
- la figure 3 représente une vanne selon un deuxième exemple de mise en oeuvre de l'invention,
- la figure 4 représente une variante de la vanne selon la figure 2,
- la figure 5 représente une variante de la vanne selon la figure 3, et
- la figure 6 représente de façon schématique un exemple de procédé de réglage de la position fermée d'une vanne selon l'invention.

On a représenté sur les figures 2 à 5 une vanne 1 couverte par l'invention. Sur ces figures, la vanne 1 est une vanne dite « deux voies » mais l'invention n'y est pas limitée, comme on le verra par la suite.

La vanne 1 qui va être décrite est une vanne utilisée dans un circuit d'air d'un moteur thermique, par exemple utilisé pour propulser un véhicule automobile.

La vanne 1 comprend un corps 2, par exemple réalisé en aluminium, en acier, en plastique ou en inox dans lequel est ménagé un conduit 3. Il s'agit par exemple d'un conduit d'admission, d'échappement ou d'un conduit formant une boucle de recirculation des gaz d'échappement (encore appelée boucle EGR), cette boucle pouvant être une boucle haute pression ou basse pression. Le corps 2 de la vanne peut être réalisé par l'assemblage de deux parties 2a et 2b, ces deux parties se contactant selon un plan P dont une paroi définit une partie du conduit 3, comme on le verra par la suite. Le plan P sera appelé « plan de joint » du corps 2 par la suite.

Le conduit 3 est dans l'exemple considéré parcouru par des gaz pouvant atteindre une température élevée, par exemple jusqu'à 700°C.

Comme représenté sur les figures 2 à 5, la vanne 1 comprend un volet 5 disposé dans le corps et monté pivotant grâce à un arbre 7 reçu dans un logement 8 du corps 2 par l'intermédiaire d'un ou plusieurs paliers non représentés. L'arbre 7 s'étend selon une direction X et le ou les paliers présentent un jeu radial par rapport à la direction X permettant à l'arbre 7 de se déplacer perpendiculairement à la direction X dans le palier et dans le logement 8. Ce jeu radial a été exagéré sur les figures pour des raisons de clarté. Un support 9 s'étendant radialement par rapport à l'arbre 7 relie dans l'exemple décrit l'arbre 7 et le volet 5.

Comme on peut le voir sur les figures 2 à 5, lorsqu'il est en position fermée, le volet 5 présente une première zone de contact 11 avec une première paroi 12 du corps 2 tandis qu'il vient indirectement en contact au niveau d'une deuxième zone 15 avec une deuxième paroi 14 du corps 2.

Le contact entre la première zone de contact 11 et la première paroi 12 du corps est par exemple un contact linéique.

Comme on peut le voir sur les figures 2 à 5, la première zone de contact 11 et la deuxième zone 15 sont chacune disposées sur des côtés différents de l'axe X de l'arbre 7.

Dans l'exemple des figures 2 et 3, la première paroi 12 du corps 2 appartient à la première partie 2a du corps 2 tandis que la deuxième paroi 14 du corps 2 appartient à la deuxième partie 2b du corps 2.

Plus précisément, la deuxième paroi 14 appartient dans l'exemple des figures 2 et 3 à une portion 16 de la deuxième partie 2b du corps 2 faisant saillant dans le conduit 3.

Une pièce intermédiaire 20 empêche le contact direct entre le volet 5 et le corps 2 au niveau de la deuxième zone 15. Au moins une partie de la pièce intermédiaire 20 s'étend en effet entre la deuxième paroi 14 et le volet au niveau de la deuxième zone 15 lorsque le volet 5 est en position fermée, formant ainsi une butée pour le déplacement du volet 5 vers la position fermée.

Dans l'exemple de la figure 2, un logement 22 est ménagé dans la portion en saillie 16 et la pièce intermédiaire 20 est reçue en partie dans ce logement 22 et maintenue dans ce dernier, de sorte que la partie 23 de la pièce intermédiaire non reçue dans le logement 22 soit interposée entre le corps et le volet 5 au niveau de la deuxième zone 15 lorsque le volet 5 est en position fermée.

Un moyen de solidarisation de la pièce intermédiaire 20 dans le logement 22 peut être prévu afin que ce dernier soit maintenu en position dans le logement et immobilisé par rapport à la deuxième partie 2b du corps 2. Ce moyen de solidarisation peut être obtenu par :
- sertissage,
- soudure,
- collage,
- montage par emmanchement serré dans le logement 22, par exemple via une presse,
- déformation volontaire d'un filet ménagé dans le logement 22 pour coopérer avec la pièce intermédiaire 20.

La pièce intermédiaire 20 est par exemple une goupille, une vis ou un rivet.

Lorsque la pièce intermédiaire 20 est une vis, elle peut être rendue solidaire du logement 22 par une déformation volontaire du filetage prévu dans le logement 22, comme mentionné ci-dessus, ou à l'aide d'un contre-écrou coopérant avec cette vis 20.

Dans l'exemple de la figure 3, le logement 22 est ménagé dans le volet 5 au niveau de la deuxième zone 15 du volet. Similairement à ce qui a été décrit en référence à la figure 2, des moyens de solidarisation de la pièce intermédiaire 20 dans le logement 22 peuvent être prévus de manière à ce que la pièce intermédiaire 20 soit maintenue dans une position dans laquelle une portion 23 de celle-ci s'étend hors du logement 22 pour s'interposer entre la deuxième zone 15 et la deuxième paroi 14 de la deuxième partie 2b du corps 2.

Dans l'exemple des figures 2 et 3, le volet 5 est réalisé d'une seule pièce, ayant notamment une forme de plaque lorsqu'il est observé dans le plan des figures, c'est-à-dire perpendiculairement à l'axe X de l'arbre 7.

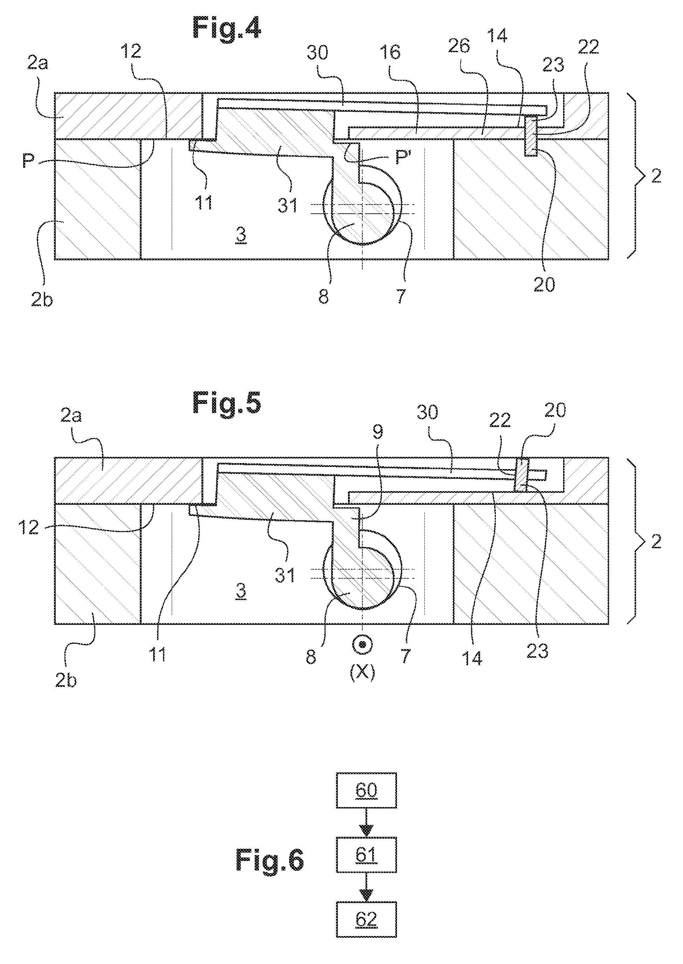

Les exemples des figures 4 et 5 diffèrent des exemples des figures 2 et 3 notamment par le fait que la première paroi 12 et la deuxième paroi 14 appartiennent toutes deux à la première partie 2a du corps 2.

Plus précisément, dans l'exemple des figures 4 et 5, la deuxième paroi 14 n'appartient pas à la portion en saillie 16, qui est ici ménagée dans la première partie 2a et non dans la deuxième partie 2b du corps 2, mais à une portion de transition 26 interposée entre ladite portion en saillie 16 et le reste de la première partie 2a du corps 2. Cette portion de transition 26 s'étend dans le plan des figures entre l'extrémité de la portion en saillie 16 opposée à son extrémité libre et le reste de la première partie 2a.

Comme on peut le voir sur les figures 4 et 5, la portion 26 de la première partie 2a du corps 2 présente une face en regard du conduit 3 et une face opposée en regard de la deuxième partie 2b du corps 2.

Le volet 5 présente dans cet exemple deux parties distinctes 30 et 31.

La première partie 30 est disposée au niveau de la première partie 2a du corps 2 lorsque le volet est dans la position fermée et elle s'étend de part et d'autre de l'axe X de l'arbre 7. La deuxième zone 12 appartient dans cet exemple à la première partie 30.

La deuxième partie 31 porte la première zone de contact 11 et ne s'étend ici que d'un seul côté de l'axe X de l'arbre 7, auquel elle est reliée par le support 9. Le long du conduit 3, la deuxième partie 31 est dans l'exemple des figures 4 et 5 interposé entre le support 9 et la première partie 30.

Dans l'exemple de la figure 4, le logement 22 recevant une partie de la pièce intermédiaire 20 est ménagé à travers la portion 26 et se poursuit jusque dans la deuxième partie 2b du corps 2. Une fois immobilisée dans le logement 22 par des moyens de solidarisation qui peuvent être similaires à ceux décrits précédemment, une partie 23 de ladite pièce est interposée entre la deuxième paroi 14 et la deuxième zone 12 du volet. Bien entendu, dans un autre exemple, le logement 22 peut être borgne dans la portion 26, c'est-à-dire ne pas s'étendre jusqu'à la deuxième partie 2b du corps 2.

L'exemple de la figure 5 diffère de celui de la figure 4 par le fait que, similairement à ce qui avait été décrit en référence à la figure 3, la pièce intermédiaire 20 est reçue dans un logement 22 qui est ménagé dans le volet, et plus précisément dans la première partie 30 du volet 5.

On va maintenant décrire en référence à la figure 6 de façon très schématique un exemple de procédé de réglage de la position fermée de la vanne 1 des figures 2 et 3.

Selon une première étape 60, on amène le volet 5 dans une position dans laquelle la deuxième zone 15 est en regard de la deuxième paroi 14 de la deuxième partie 2b du corps 2, alors que la première partie 2a du corps est ôtée et que la pièce intermédiaire 20 est encore mobile par rapport au volet 5 et à la deuxième partie 2b.

On agit alors sur la pièce intermédiaire 20 pour que l'écart entre la deuxième zone 15 du volet 5 et la deuxième paroi 14 de la deuxième partie 2b du corps prenne une valeur prédéfinie.

Lors d'une étape 61, une fois la valeur prédéfinie atteinte pour cet écart, on solidarise la pièce intermédiaire 20 à la deuxième partie 2b du corps dans l'exemple de la figure 2, respectivement à la deuxième zone 15 du volet 5 dans l'exemple de la figure 3, de manière à ce que lorsque le volet 5 est dans la position fermée, l'écart entre la deuxième zone 15 du volet 5 et ladite deuxième paroi 14 de la deuxième partie 2b du corps 2 ait une valeur égale à la valeur prédéfinie du fait qu'une partie 23 de la pièce intermédiaire 20 est interposée entre la deuxième zone 15 et la deuxième paroi 14.

Lors d'une étape 62, on met en place la première partie 2a du corps 2 sur la deuxième partie 2b, et cette première partie 2a du corps est ensuite solidarisée à la deuxième partie 2b du corps.

Les étapes 60 et 61 peuvent être effectuées alors qu'une pièce de réglage de dimension semblable à la première partie 2a du corps, et présentant une paroi contre laquelle la première zone 11 peut venir en contact lorsque le volet 5 est dans la position fermée, est disposée sur la deuxième partie 2b du volet 5. La présence d'une découpe ou de toute autre lumière dans cette pièce de réglage par laquelle un accès à la deuxième zone 15 du volet est ménagé permet de régler l'écart lié à la présence de la pièce intermédiaire 20 et de solidariser celle-ci au volet 5 ou à la deuxième partie 2b du corps 2 bien que la pièce de réglage soit en place sur la deuxième partie 2b du corps 2.

Lorsque le procédé de réglage est appliqué à une vanne 1 selon les figures 4 et 5, le procédé peut être effectué alors que le corps de la vanne est déjà assemblé. Il n'est dans ce cas pas nécessaire d'avoir recours à une pièce de réglage disposée temporairement à la place de la première partie 2a du corps 2.

Dans un autre exemple non décrit, lorsque la pièce intermédiaire 20 est destinée à être solidarisée au volet 5, le réglage de l'écart par action sur la pièce intermédiaire peut être effectué hors du corps de la vanne.

L'invention n'est pas limitée aux exemples qui viennent d'être décrits.

Dans tout ce qui précède, la distance Dc, définie comme étant la distance entre le centre du logement 8 et le plan de joint P du corps 2peut être inférieure à la distance Dv, définie comme étant la distance entre le centre de l'arbre 7 et le plan de joint P' du volet 5. Le plan de joint du volet P' est alors situé depuis l'arbre 7 au-delà du plan de joint du corps P. Le fait que le plan de joint P' du volet 5 soit situé au-delà depuis l'arbre 7 du plan de joint P du corps 2 n'empêche pas le volet 5 d'atteindre la position fermée du fait de l'existence d'un jeu supplémentaire dans le ou les paliers. En effet, sous l'effet du couple de fermeture appliqué sur le volet par un actionneur non représenté, l'arbre 7 se déplace radialement par rapport à la direction X dans le logement 8, de sorte que les positions relatives par rapport à l'arbre 7 du plan de joint P' du volet 5 et du plan de joint P du corps 2 sont modifiées.

La détermination du jeu dans le ou les paliers permettant d'éviter le coincement du volet 5 contre la paroi du corps 2, lorsque le volet 5 passe dans la position fermée, s'effectue par exemple en prenant en compte les imprécisions sur les cotes suivantes :
- distance Dv, et
- distance Dc.

En variante, la distance Dc peut être supérieure à la distance Dv, c'est-à-dire que le plan de joint du volet P' est situé en-deça depuis l'arbre 7 du plan de joint du corps P. Dans ce cas, contrairement au cas précédent, il n'est pas nécessaire de modifier les positions relatives du plan de joint P' du volet 5 et du plan de joint P du corps 2 par rapport à l'arbre 7 pour permettre au volet 5 de gagner la position fermée.

Les exemples des figures 2 à 5 portent sur une vanne dite « deux voies ». Néanmoins, l'invention s'applique également à des vannes dites « trois voies ».

Dans le cas des figures 4 et 5 par exemple, la première partie 30 du volet 5 peut obturer ou non une partie du circuit d'échappement d'un moteur thermique tandis que le conduit 3 sélectivement obturé par la deuxième partie 31 du volet est une partie d'une boucle de recirculation vers l'admission du moteur thermique.

L'expression « comprenant un » doit être comprise comme synonyme de l'expression « comprenant au moins un », sauf lorsque le contraire est spécifié.

## Revendications

1. Vanne (1), notamment pour moteur thermique, comprenant :
- un corps (2) dans lequel sont ménagés : un logement (8) dans lequel est disposé au moins un palier, et un conduit (3) apte à être parcouru par un fluide, et
- un volet (5) monté pivotant dans le conduit (2) par un arbre (7) reçu avec jeu radial dans le palier,
le volet (5) pivotant entre :
- une position ouverte, et
- une position fermée dans laquelle il vient en contact avec le corps (2) :
- directement par une première zone de contact (11) du volet située d'un premier côté de l'arbre (7), et
- indirectement via une pièce intermédiaire (20) qui est alors interposée au moins en partie entre le corps (2) et une deuxième zone (15) du volet (5) située d'un deuxième côté de l'arbre (7) opposé audit premier côté,
le passage par le volet (5) de la position ouverte à la position fermée s'accompagnant d'un déplacement radial de l'arbre (7) dans le palier, **caractérisée en ce que** la vanne est configurée de manière à permettre de régler la valeur de l'écart causé par l'interposition de la pièce intermédiaire (20) entre la deuxième zone (15) du volet et le corps (2).

2. Vanne selon la revendication 1, la pièce intermédiaire (20) étant configurée pour être solidarisable au corps (2) et la deuxième zone (15) du volet venant en appui contre ladite pièce intermédiaire (20) lorsque le volet (5) est dans la position fermée.

3. Vanne selon la revendication 1, la pièce intermédiaire (20) étant configurée pour être solidarisable au volet (5) et la pièce intermédiaire (20) venant en appui contre le corps (2) lorsque le volet (5) est dans la position fermée.

4. Vanne selon l'une quelconque des revendications 1 à 3, le corps (2) présentant, dans un plan perpendiculaire à l'arbre (7), une portion (16) faisant saillie dans le conduit (3), et la pièce intermédiaire (20) étant disposée entre ladite portion (16) en saillie et la deuxième zone (15) du volet (5) lorsque le volet (5) est dans la position fermée.

5. Vanne selon la revendication 4, le corps (2) comprenant un logement (22) ménagé dans la portion (16) faisant saillie, et la pièce intermédiaire (20) et le logement (22) étant configurés pour que la pièce intermédiaire (20) puisse être reçue dans le logement (22) puis maintenue en place dans ce dernier dans au moins une position prédéfinie.

6. Vanne selon la revendication 4, la deuxième zone (15) du volet comprenant un logement (22), et la pièce intermédiaire (20) et le logement (22) étant configurés pour que la pièce intermédiaire (20) puisse être reçue dans le logement (22) puis maintenue en place dans ce dernier dans au moins une position prédéfinie.

7. Vanne selon l'une quelconque des revendications 1 à 3, le corps (2) présentant, dans un plan perpendiculaire à l'arbre (7), une portion (16) faisant saillie dans le conduit (3), ladite portion (16) comprenant une extrémité libre et une extrémité opposée reliée à une portion de transition (26) dont une seule face, dans ledit plan, est en regard du conduit (3).

8. Vanne selon la revendication 7, le corps (2) comprenant un logement (22) ménagé dans la portion de transition (26), et la pièce intermédiaire (20) et le logement (22) étant configurés pour que la pièce intermédiaire (20) puisse être reçue dans le logement (22) puis maintenue en place dans ce dernier dans au moins une position prédéfinie.

9. Vanne selon la revendication 7, la deuxième zone (15) du volet (5) comprenant un logement (22), et la pièce intermédiaire (20) et le logement (22) étant configurés pour que la pièce intermédiaire (20) puisse être reçue dans le logement (22) puis maintenue en place dans ce dernier dans au moins une position prédéfinie.

10. Vanne selon l'une quelconque des revendications 1 à 9, étant dépourvue d'élément d'étanchéité interposé entre le volet (5) et le corps (2) lorsque le volet (5) est dans la position fermée.

11. Procédé de réglage de la position fermée d'un volet (5) d'une vanne (1), notamment d'une vanne pour moteur thermique, la vanne comprenant :
- un corps (2) dans lequel est ménagé un conduit (3), et
- un volet (5) monté pivotant dans le conduit (3) par un arbre (7), le volet (5) pivotant entre une position ouverte et une position fermée, le volet (5) ayant une première zone (11) apte à venir en regard d'une première paroi (12) du corps (2) et une deuxième zone (15) apte à venir en regard d'une deuxième paroi (14) du corps (2) lorsque le volet (5) est en position fermée,
procédé dans lequel :
- on amène le volet (5) dans une position dans laquelle la deuxième zone (15) est en regard de ladite deuxième paroi (14) du corps (2) et on agit sur une pièce intermédiaire (20) mobile à la fois par rapport au corps (2) et au volet (5) pour que l'écart entre la deuxième zone (15) du volet (5) et la deuxième paroi (14) du corps (2) prenne une valeur prédéfinie,
- une fois la valeur prédéfinie atteinte pour cet écart, on solidarise la pièce intermédiaire (20) à l'un du volet (5) et du corps (2) de manière à ce que, lorsque le volet est dans la position fermée, l'écart entre la deuxième zone (15) du volet et ladite deuxième paroi (14) du corps ait une valeur égale à la valeur prédéfinie, du fait que la pièce intermédiaire (20) est au moins en partie disposée entre la deuxième zone (15) du volet et ladite deuxième paroi (14) du corps.

12. Procédé selon la revendication 11, dans lequel le corps comporte une première (2a) et une deuxième (2b) parties, le conduit (3) étant ménagé successivement dans la première (2a) et dans la deuxième (2b) parties du corps, et dans lequel la première paroi (12) appartient à la première partie (2a) du corps et la deuxième paroi (14) appartient à la deuxième partie (2b) du corps, procédé dans lequel :
- le volet est amené dans la position dans laquelle la deuxième zone (15) est en regard de ladite deuxième paroi (14) de la deuxième partie (2b) du corps en l'absence de la première partie (2a) du corps, et
- on met en place la première partie (2a) du corps sur la deuxième partie (2b) du corps une fois la pièce intermédiaire (20) solidarisée à l'un du volet (5) et du corps (2).

13. Procédé selon la revendication 12, dans lequel en l'absence de la première partie (2a) du corps et avant la solidarisation de la pièce intermédiaire (20), une pièce de réglage est mise en place sur la deuxième partie (2b) du corps, cette pièce de réglage comprenant des moyens d'accès à la deuxième zone (15) du volet qui interagit avec la pièce intermédiaire (20), de façon à permettre d'agir sur la pièce intermédiaire (20) pour régler la valeur de l'écart entre la deuxième zone (15) du volet (5) et la deuxième paroi (14) du corps (2).

14. Procédé selon la revendication 13, dans lequel le corps (2) comporte une première (2a) et une deuxième (2b) parties, le conduit (3) étant ménagé successivement dans la première (2a) et dans la deuxième (2b) parties du corps, et dans lequel la première paroi (12) et la deuxième paroi (14) appartiennent à la première partie (2a) du corps.

## Patentansprüche

1. Ventil (1), insbesondere für eine Wärmekraftmaschine, umfassend:
- einen Körper (2), in dem ausgenommen sind: eine Aufnahme (8), in der mindestens ein Lager und eine Leitung (3), die von einem Fluid durchströmt werden kann, angeordnet sind, und
- eine Klappe (5), die schwenkbar in der Leitung (2) durch eine Welle (7), die mit einem Radialspiel in dem Lager aufgenommen ist, montiert ist,
wobei die Klappe (5) schwenkt zwischen:
- einer offenen Position und
- einer geschlossenen Position, in der sie mit dem Körper (2) in Kontakt kommt:
- direkt durch eine erste Kontaktzone (11) der Klappe, die sich auf einer ersten Seite der Welle (7) befindet, und
- indirekt über ein Zwischenstück (20), das nun zumindest teilweise zwischen dem Körper (2) und einer zweiten Zone (15) der Klappe (5) angeordnet ist, die sich auf einer zweiten Seite der Welle (7) gegenüber der ersten Seite befindet,
wobei der Übergang der Klappe (5) von der offenen Position in die geschlossene Position von einer Radialverschiebung der Welle (7) im Lager begleitet ist,
**dadurch gekennzeichnet, dass** das Ventil dazu vorgesehen ist, die Einstellung des Werts des Abstands, der durch die Anordnung des Zwischenstücks (20) zwischen der zweiten Zone (15) der Klappe und dem Körper (2) entsteht, zu ermöglichen.

2. Ventil nach Anspruch 1, wobei das Zwischenstück (20) derart ausgeführt ist, dass es mit dem Körper (2) verbunden werden kann, und die zweite Zone (15) der Klappe an dem Zwischenstück (20) zur Anlage gelangt, wenn sich die Klappe (5) in der geschlossenen Position befindet.

3. Ventil nach Anspruch 1, wobei das Zwischenstück (20) derart ausgeführt ist, dass es mit der Klappe (5) verbunden werden kann, und das Zwischenstück (20) am Körper (2) zur Anlage gelangt, wenn sich die Klappe (5) in der geschlossenen Position befindet.

4. Ventil nach einem der Ansprüche 1 bis 3, wobei der Körper (2) in einer Ebene senkrecht auf die Welle (7) einen Abschnitt (16) aufweist, der in der Leitung (3) herausragt, und wobei das Zwischenstück (20) zwischen dem herausragenden Abschnitt (16) und der zweiten Zone (15) der Klappe (5) angeordnet ist, wenn sich die Klappe (5) in der geschlossenen Position befindet.

5. Ventil nach Anspruch 4, wobei der Körper (2) eine Aufnahme (22) umfasst, die in dem herausragenden Abschnitt (16) ausgenommen ist, und das Zwischenstück (20) und die Aufnahme (22) derart ausgeführt sind, dass das Zwischenstück (20) in der Aufnahme (22) aufgenommen, dann in dieser letztgenannten in mindestens einer vordefinierten Position gehalten werden kann.

6. Ventil nach Anspruch 4, wobei die zweite Zone (15) der Klappe eine Aufnahme (22) umfasst, und das Zwischenstück (20) und die Aufnahme (22) derart ausgeführt sind, dass das Zwischenstück (20) in der Aufnahme (22) aufgenommen, dann in dieser letztgenannten in mindestens einer vordefinierten Position gehalten werden kann.

7. Ventil nach einem der Ansprüche 1 bis 3, wobei der Körper (2) in einer Ebene senkrecht auf die Welle (7) einen in der Leitung (3) herausragenden Abschnitt (16) aufweist, wobei der Abschnitt (16) ein freies Ende und ein gegenüberliegendes Ende umfasst, das mit einem Übergangsabschnitt (26) verbunden ist, von dem nur eine Seite in der Ebene der Leitung (3) gegenüberliegt.

8. Ventil nach Anspruch 7, wobei der Körper (2) eine Aufnahme (22) umfasst, die in dem Übergangsabschnitt (26) ausgenommen ist, und das Zwischenstück (20) und die Aufnahme (22) derart ausgeführt sind, dass das Zwischenstück (20) in der Aufnahme (22) aufgenommen, dann in dieser letztgenannten in mindestens einer vordefinierten Position gehalten werden kann.

9. Ventil nach Anspruch 7, wobei die zweite Zone (15) der Klappe (5) eine Aufnahme (22) umfasst, und das Zwischenstück (20) und die Aufnahme (22) derart ausgeführt sind, dass das Zwischenstück (20) in der Aufnahme (22) aufgenommen, dann in dieser letztgenannten in mindestens einer vordefinierten Position gehalten werden kann.

10. Ventil nach einem der Ansprüche 1 bis 9, wobei kein Dichtungselement zwischen der Klappe (5) und dem Körper (2) angeordnet ist, wenn sich die Klappe (5) in der geschlossenen Position befindet.

11. Verfahren zur Steuerung der geschlossenen Position einer Klappe (5) eines Ventils (1), insbesondere eines Ventils für eine Wärmekraftmaschine, wobei das Ventil umfasst:
- einen Körper (2), in dem eine Leitung (3) ausgenommen ist, und
- eine Klappe (5), die schwenkbar in der Leitung (3) durch eine Welle (7) montiert ist, wobei die Klappe (5) zwischen einer offenen Position und einer geschlossenen Position schwenkt, wobei die Klappe (5) eine erste Zone (11), die geeignet ist, gegenüber einer ersten Wand (12) des Körpers (2) angeordnet zu werden, und eine zweite Zone (15) umfasst, die geeignet ist, gegenüber einer zweiten Wand (14) des Körpers (2) angeordnet zu werden, wenn sich die Klappe (5) in geschlossener Position befindet,
wobei bei dem Verfahren:
- die Klappe (5) in eine Position gebracht wird, in der die zweite Zone (15) der zweiten Wand (14) des Körpers (2) gegenüberliegt, und auf ein Zwischenstück (20), das sowohl in Bezug zum Körper (2) als auch zur Klappe (5) beweglich ist, eingewirkt wird, damit der Abstand zwischen der zweiten Zone (15) der Klappe (5) und der zweiten Wand (14) des Körpers (2) einen vordefinierten Wert annimmt,
- wenn der vordefinierte Wert erreicht ist, das Zwischenstück (20) mit einem von Klappe (5) und Körper (2) verbunden wird, so dass, wenn sich die Klappe in der geschlossenen Position befindet, der Abstand zwischen der zweiten Zone (15) der Klappe und der zweiten Wand (14) des Körpers einen Wert gleich dem vordefinierten Wert hat, da das Zwischenstück (20) zumindest teilweise zwischen der zweiten Zone (15) der Klappe und der zweiten Wand (14) des Körpers angeordnet ist.

12. Verfahren nach Anspruch 11, bei dem der Körper einen ersten (2a) und einen zweiten (2b) Teil umfasst, wobei die Leitung (3) nacheinander in dem ersten (2a) und in dem zweiten (2b) Teil des Körpers ausgenommen ist, und bei dem die erste Wand (12) dem ersten Teil (2a) des Körpers und die zweite Wand (14) dem zweiten Teil (2b) des Körpers angehört,
wobei bei dem Verfahren:
- die Klappe in die Position gebracht wird, in der die zweite Zone (15) der zweiten Wand (14) des zweiten Teils (2b) des Körpers bei Nichtvorhandensein des ersten Teils (2a) des Körpers gegenüberliegt, und
- der erste Teil (2a) des Körpers auf dem zweiten Teil (2b) des Körpers angeordnet wird, wenn das Zwischenstück (20) mit einem von Klappe (5) und Körper (2) verbunden ist.

13. Verfahren nach Anspruch 12, bei dem bei Nichtvorhandensein des ersten Teils (2a) des Körpers und vor der Verbindung des Zwischenstücks (20) ein Einstellteil auf dem zweiten Teil (2b) des Körpers angeordnet wird, wobei dieses Einstellteil Zugangsmittel zur zweiten Zone (15) der Klappe umfasst und mit dem Zwischenstück (20) zusammenwirkt, um es zu ermöglichen, auf das Zwischenstück (20) einzuwirken, um den Wert des Abstands zwischen der zweiten Zone (15) der Klappe (5) und der zweiten Wand (14) des Körpers (2) einzustellen.

14. Verfahren nach Anspruch 13, bei dem der Körper (2) einen ersten (2a) und einen zweiten (2b) Teil umfasst, wobei die Leitung (3) nacheinander in dem ersten (2a) und in dem zweiten (2b) Teil des Körpers ausgenommen ist, und bei dem die erste Wand (12) und die zweite Wand (14) dem ersten Teil (2a) des Körpers angehören.

## Claims

1. Valve (1), in particular for a heat engine, comprising:
- a body (2) in which are created: a recess (8) in which there is arranged at least one bearing, and a conduit (3) through which a fluid can flow, and
- a flap (5) mounted so as to be able to pivot in the conduit (2) by a shaft (7) that is received with radial play in the bearing,
the flap (5) pivoting between:
- an open position, and
- a closed position in which it comes into contact with the body (2):
- directly via a first contact region (11) of the flap located on a first side of the shaft (7), and
- indirectly via an intermediate component (20) which is then at least partially interposed between the body (2) and a second region (15) of the flap (5), which region is located on a second side of the shaft (7), opposite said first side,
wherein the passage of the flap (5) from the open position to the closed position is accompanied by a radial displacement of the shaft (7) in the bearing,
**characterized in that** the valve is configured so as to make it possible to adjust the value of the offset caused by the interposition of the intermediate component (20) between the second region (15) of the flap and the body (2).

2. Valve according to Claim 1, the intermediate component (20) being configured such that it can be secured to the body (2) and the second region (15) of the flap coming to press against said intermediate component (20) when the flap (5) is in the closed position.

3. Valve according to Claim 1, the intermediate component (20) being configured such that it can be secured to the flap (5) and the intermediate component (20) coming to press against the body (2) when the flap (5) is in the closed position.

4. Valve according to any one of Claims 1 to 3, the body (2) having, in a plane perpendicular to the shaft (7), a portion (16) that projects into the conduit (3), and the intermediate component (20) being arranged between said projecting portion (16) and the second region (15) of the flap (5) when the flap (5) is in the closed position.

5. Valve according to Claim 4, the body (2) comprising a recess (22) created in the projecting portion (16), and the intermediate component (20) and the recess (22) being configured such that the intermediate component (20) can be received in the recess (22) then held in place therein in at least one predefined position.

6. Valve according to Claim 4, the second region (15) of the flap comprising a recess (22), and the intermediate component (20) and the recess (22) being configured such that the intermediate component (20) can be received in the recess (22) then held in place therein in at least one predefined position.

7. Valve according to any one of Claims 1 to 3, the body (2) having, in a plane perpendicular to the shaft (7), a portion (16) that projects into the conduit (3), said portion (16) comprising a free end and an opposite end connected to a transition portion (26), of which only one face, in said plane, faces the conduit (3).

8. Valve according to Claim 7, the body (2) comprising a recess (22) created in the transition portion (26), and the intermediate component (20) and the recess (22) being configured such that the intermediate component (20) can be received in the recess (22) then held in place therein in at least one predefined position.

9. Valve according to Claim 7, the second region (15) of the flap (5) comprising a recess (22), and the intermediate component (20) and the recess (22) being configured such that the intermediate component (20) can be received in the recess (22) then held in place therein in at least one predefined position.

10. Valve according to any one of Claims 1 to 9, having no sealing element interposed between the flap (5) and the body (2) when the flap (5) is in the closed position.

11. Method for adjusting the closed position of a flap (5) of a valve (1), in particular a valve for a heat engine, the valve comprising:
- a body (2) in which is created a conduit (3), and
- a flap (5) mounted so as to be able to pivot in the conduit (3) by a shaft (7), the flap (5) pivoting between an open position and a closed position, the flap (5) having a first region (11) that is able to come to face a first wall (12) of the body (2) and a second region (15) that is able to come to face a second wall (14) of the body (2) when the flap (5) is in the closed position,
in which method:
- the flap (5) is brought into a position in which the second region (15) faces said second wall (14) of the body (2) and an intermediate component (20), which is able to move both with respect to the body (2) and with respect to the flap (5), is acted upon such that the separation between the second region (15) of the flap (5) and the second wall (14) of the body (2) adopts a predefined value,
- once the predefined value for this separation has been reached, the intermediate component (20) is secured to either the flap (5) or the body (2) such that, when the flap is in the closed position, the separation between the second region (15) of the flap and said second wall (14) of the body has a value equal to the predefined value by virtue of the fact that the intermediate component (20) is arranged at least in part between the second region (15) of the flap and said second wall (14) of the body.

12. Method according to Claim 11, in which the body comprises a first part (2a) and a second part (2b), the conduit (3) being created successively in the first part (2a) and in the second part (2b) of the body, and in which the first wall (12) belongs to the first part (2a) of the body and the second wall (14) belongs to the second part (2b) of the body,
in which method:
- the flap is brought into the position in which the second region (15) faces said second wall (14) of the second part (2b) of the body when the first part (2a) of the body is not present, and
- the first part (2a) of the body is placed on the second part (2b) of the body once the intermediate component (20) has been secured to either the flap (5) or the body (2).

13. Method according to Claim 12, in which, when the first part (2a) of the body is not present, and before the intermediate component (20) has been secured, an adjusting component is put in place on the second part (2b) of the body, this adjusting component comprising means for access to the second region (15) of the flap which interacts with the intermediate component (20) so as to make it possible to act on the intermediate component (20) in order to adjust the value of the separation between the second region (15) of the flap (5) and the second wall (14) of the body (2).

14. Method according to Claim 13, in which the body (2) comprises a first part (2a) and a second part (2b), the conduit (3) being created successively in the first part (2a) and in the second part (2b) of the body, and in which the first wall (12) and the second wall (14) belong to the first part (2a) of the body.
